# EUROPÄISCHE PATENTANMELDUNG

(11) **EP 2 439 558 A1**
(43) Veröffentlichungstag der Anmeldung: **11.04.2012**
(21) Anmeldenummer: 10013427.9
(22) Anmeldetag: 07.10.2010
(51) Int. Cl.: G01V 3/08

(54) **Detektorsonde und Verfahren zum Herstellen einer Detektorsonde**

(71) Anmelder: Ebinger, Klaus, 51149 Köln (DE)
(72) Erfinder: Ebinger, Klaus, 51149 Köln (DE)
(74) Vertreter: Heim, Hans-Karl

(57) **Zusammenfassung**

Die Erfindung betrifft eine Detektorsonde mit einer Detektorspule, welche mehrere Windungen aufweist. Hierbei sind die Windungen in derselben geometrischen Ebene vorgesehen und durch ein mindestens einadriges Kabel ausgebildet. Das Kabel zum Bilden der Windungen der Detektorspule ist im Wesentlichen in konzentrischen Kreisen angeordnet, die von einem Außenbereich bis zu einem Zentralbereich verlaufen. Des Weiteren ist jeder konzentrische Kreis in einem sich vom Zentralbereich zum Außenbereich erstreckenden Übergangsbereich abweichend von der Kreisform ausgebildet. In diesem Übergangsbereich ist das Kabel von einem jeweils radial innen liegenden konzentrischen Kreis zu einem benachbarten radial weiter außen liegenden konzentrischen Kreis übergeleitet. Außerdem wird in dem Übergangsbereich das Kabel vom äußersten konzentrischen Kreis zum Zentralbereich verlegt. Ferner betrifft die Erfindung ein Verfahren zum Herstellen der Detektorsonde.

## Beschreibung

Die Erfindung betrifft eine Detektorsonde, welche mehrere Windungen aufweist, wobei die Windungen in derselben geometrischen Ebene vorgesehen sind. Die Windungen sind durch ein mindestens einadriges Kabel ausgebildet.

Ferner betrifft die Erfindung ein Verfahren zum Herstellen einer derartigen Detektorsonde.

Gattungsgemäße Detektorsonden werden beispielsweise bei Metallsuchgeräten verwendet. Grundsätzlich sind verschiedene Methoden zum Betrieb derartiger Metallsuchgeräte mit gattungsgemäßen Detektorspulen bekannt. Zum Einen ist das sogenannte Continuous-Wave-Verfahren (CW) bekannt, bei dem Frequenzänderungen sowie der Oberwellengehalt eines kontinuierlich ausgesandten elektromagnetischen Wechselfeldes zur Metallortung bewertet wird.

Ein anderes Verfahren ist das sogenannte Puls-Induktions-Verfahren (PI). Hierbei werden Monosuchspulen beziehungsweise Monoschleifen verwendet, die mit nur einer Induktivität betrieben werden. Bei diesem Verfahren wird die Schleife beziehungsweise Spule periodisch von einem Gleichstrom durchflossen, der sich zeitlich nach einer Sprungfunktion ändert. Durch den Stromfluss wird in der Suchspule beziehungsweise der Suchschleife ein elektromagnetisches Feld erzeugt. Im Wirkungsbereich des erzeugten pulsierenden elektromagnetischen Feldes erfahren Metallobjekte eine Magnetisierung, beispielsweise durch in dem Metallobjekte induzierte Wirbelströme. Diese Wirbelströme führen zu einem Sekundärfeld, welches auf die Suchschleife oder -spule zurückwirkt. Das Sekundärfeld kann als Ortungssignal verwendet werden. Demnach kann das PI-Verfahren als Echoverfahren bezeichnet werden, das an zeitliche Induktionen gebunden ist.

Anhand des von den Metallteilen emittierten Sekundärfeldes, welches in Sendepausen durch die Suchspule beziehungsweise die Suchschleife aufgenommen werden kann, werden Informationen über diese Metallteile, wie deren Lage, Beschaffenheit und Größe, ermittelt. Die Metallteile verfügen über eine objektspezifische Abklingzeit. Diese wird durch die Leitfähigkeit und die Höhe der induzierten Wirbelströme bestimmt. Kleine metallische Objekte verfügen in der Regel über kurze, großmetallische Objekte entsprechend über eine längere Abklingzeit. Durch das Erfassen der Sekundärfelder, die auf die Abklingzeit zurückschließen lassen, können Aussagen über die detektierten Metallobjekte getätigt werden. Hierzu wird üblicherweise das Sekundärfeld beziehungsweise die Abklingzeit elektronisch erfasst und zu einer Anzeige umgesetzt.

Ein wesentliches Problem des PI-Verfahrens besteht darin, dass auch die Suchschleifen oder Suchspulen durch induktive und kapazitive Effekte über eine typische Abklingzeit verfügen. Diese Abklingzeit sollte möglichst kurz gehalten werden, da sie das Sekundärfeld überlagert. Ein gängiger Spulenwickel, bei dem Windungen auf Windungen liegen, verfügt über eine relativ große Eigenkapazität. Dies führt zu einer langen Abklingzeit. Auch die Art der verwendeten Drahtwicklung beeinflusst die Abklingzeit der Spule. So führt die Verwendung von Litzen, im Gegensatz zur Verwendung von Volldrähten, zu einer Verkürzung der Abklingzeit der Spule.

Kleine Suchobjekte, wie beispielsweise Goldnuggets oder archäologische Metallfragmente, weisen eine sehr kurze Abklingzeit auf, die auch als magnetische Zeitkonstante bezeichnet wird. Um solche Suchobjekte nachweisen zu können, muss die Abklingzeit der Suchspule oder Schleife deutlich kürzer sein als die Abklingzeit der Suchobjekte. Nur in diesem Fall ist die Rückwirkung, das heißt das Sekundärfeld dieser kleinen Suchobjekte, welche auch als schnelle Metallobjekte bezeichnet werden, messbar.

Ein weiterer Umstand, der bei der Verwendung des PI-Verfahrens berücksichtigt werden muss, ist, dass auch verschiedene Erdböden, abhängig von der Mineralisierung, ebenfalls eine Magnetisierung durch das gepulste Magnetfeld des PI-Verfahrens erfahren. Dies führt zu einer sogenannten bodenmagnetischen Rückwirkung, welche wiederum große magnetische Zeitkonstanten aufweisen kann. Das PI-Verfahren erreicht insbesondere bei hochmineralisierten Böden, wie beispielsweise Laterit oder Magnetit, in Gegenden vulkanischen Ursprungs seine Grenzen.

Um diese Probleme zu beheben, sind spezielle PI-Schleifen bekannt, die in Art eines Flachwickels ausgeführt sind. Hierbei liegen die einzelnen Windungen nebeneinander. Dies reduziert die Spulenkapazität, welche mitbestimmend für das Abklingverhalten der Spule ist. Bei sehr kurzen Messintervallen bedarf es zusätzlich einer Abschirmung der Spule gegen dielektrische Effekte. Durch die Abschirmung wird allerdings die Eigenkapazität wiederum erhöht, was die Abklingzeit entsprechend verlängert.

Eine derartige Detektorspule für das PI-Verfahren ist beispielsweise aus der DE 103 73 49 A1 bekannt. Die dort beschriebene Detektorspule weist ein ringförmiges Gehäuse auf, in dem mehrere Windungen eines Kabels zum Ausbilden einer Spule vorgesehen sind. Bei der Verwendung einer derartigen Spule hat sich jedoch herausgestellt, dass diese zum Teil gegenüber bodenmagnetischen Effekten äußerst anfällig ist.

Des Weiteren sind auch andere Spulengeometrien in Art von Suchtellern bekannt. Derartige Suchteller sind beispielsweise in der US 3,626,279 beschrieben. Hierbei sind für eine Suchspule auf einer Leiterplatte spiralartig angeordnete Leiterbahnen vorgesehen. Zusätzlich ist für die Rückseite der Leiterplatte eine aufwändige elektrostatische Abschirmung beschrieben. Die Detektorspule wird als BFO-Gerät betrieben, welches im Deutschen auch als Schwebungssummer bezeichnet wird. Hierbei wird mit zwei Oszillatoren gearbeitet und die Suchspule ist Bestandteil eines Oszillators. Das Suchprinzip beruht auf einem Frequenzvergleich der beiden Oszillatoren mittels einer oder mehrerer Mischstufen, wobei Differenzsignale als Kriterium für das Vorhandensein von Metall ausgegeben werden. Geräte dieser Bauart werden allgemein dem Continuous-Wave-Verfahren zugeordnet. Dadurch, dass eine gedruckte Leiterplatte verwendet wird, woraus eine geringe Induktivität der Suchspule und eine schlechte Leitfähigkeit resultieren, kann eine derartige Spulenanordnung für das Pulsinduktionsverfahren nicht verwendet werden. Zusätzlich würde die Abschirmung gegen dielektrische Effekte bei der Verwendung des Pulsinduktionsverfahrens störende Rückwirkungen erzeugen.

Der Erfindung liegt die **Aufgabe** zugrunde, eine Detektorsonde zu schaffen, welche eine verbesserte Detektionsgenauigkeit aufweist und bei der insbesondere die Wechselwirkung mit bodenmagnetischen Effekten reduziert ist. Ferner soll ein Verfahren angegeben werden, um eine Detektorsonde einfach und effizient herzustellen.

Die Aufgabe wird erfindungsgemäß durch eine Detektorsonde mit den Merkmalen des Anspruchs 1 und ein Verfahren zum Herstellen einer Detektorsonde mit den Merkmalen des Anspruchs 7 gelöst.

Weitere vorteilhafte Ausführungsformen sind in den abhängigen Ansprüchen, in der Beschreibung sowie in den Figuren und deren Beschreibung angegeben.

Gemäß dem Anspruch 1 ist eine gattungsbildende Detektorsonde dadurch weiter ausgebildet, dass das Kabel zum Formen der Windungen der Detektorspule im Wesentlichen in konzentrischen Kreisen angeordnet ist. Hierbei erstrecken sich die konzentrischen Kreise von einem Außenbereich bis zu einem Zentralbereich der Sonde. Ferner ist vorgesehen, dass jeder konzentrische Kreis in einem sich vom Zentralbereich strahlenförmig zum Außenbereich erstreckenden Übergangsbereich abweichend von einer Kreisform ausgebildet ist und dass in dem Übergangsbereich das Kabel jeweils von einem radial innen liegenden konzentrischen Kreis zu dem benachbart radial weiter außen liegenden konzentrischen Kreis übergeleitet ist. In dem Übergangsbereich ist auch das Kabel vom äußersten konzentrischen Kreis zum Zentralbereich vorgesehen. Außerdem weist das Kabel eine halbleitende Schirmung auf.

Ein Grundgedanke der Erfindung kann darin gesehen werden, dass erkannt wurde, dass die geometrische Verteilung der einzelnen Schleifenwindungen beziehungsweise die gesamte Windungskonfiguration unmittelbar auf die Sucheigenschaften der Detektorspule Einfluss nimmt. Insbesondere wurde erkannt, dass bei den gängigen ringförmigen Spulenanordnungen an den Rändern eine ungewollte Feldbündelung stattfindet. Durch die flächige Anordnung der Windungen, welche sich in konzentrischen Kreisen von einem Außenbereich bis zu einem Zentralbereich der Sonde erstrecken, verteilt sich das erzeugte Magnetfeld auf die gesamte Fläche der Sonde. Ferner konzentriert sich im Gegensatz zu konventionellen Spulen die Empfindlichkeit der Sonde erstaunlicherweise auf das Schleifenzentrum. Die Empfindlichkeit nimmt in Richtung des Außenbereiches der Detektorspule ab. Dies führt zu einer besseren Detektionscharakteristik. Dies bedeutet, dass Objekte zielgenauer im Zentralbereich unter der Sonde detektiert werden können.

Außerdem wurde erstaunlicherweise festgestellt, dass durch die flächige Verteilung der Schleifenwicklung eine bessere Unterdrückung der bodenmagnetischen Effekte erreicht werden kann. Diese Unterdrückung kann rein physikalisch noch nicht ausreichend erklärt werden. Es wird jedoch vermutet, dass zwischen Innen- und Außenfeld der Detektorspule im Zusammenhang mit mineralisierten Böden eine Art Balanceeffekt entsteht, durch den die bodenmagnetischen Effekte unterdrückt werden. Im Vergleich zu bekannten Sonden ist die Störungsunterdrückung signifikant.

Die halbleitende Schirmung kann beispielsweise als halbleiteride Kunststoffschirmung ausgeführt sein. Es sind elektrisch leitfähige Gummi- und/oder Kunststoffmischungen bekannt, die derartige Eigenschaften aufweisen. Diese Mischungen finden beispielsweise als dünne Folien vielfältige Verwendung in der Elektrotechnik und Elektronik. Hierbei bewirkt die verminderte elektrische Leitfähigkeit einen Abschirmeffekt, um elektrische Einstreuungen, wie zum Beispiel Netzbrummen, in NF-Leitungen zu unterdrücken. Es ist aber auch möglich, eine leitfähige Folie zur Umwicklung des Kabels beziehungsweise dessen Adern zu verwenden, und diese dann mit PVC zu ummanteln. Bei der leitfähigen Folie kann es sich auch um einen schlechten Leiter halten.

Ein regelmäßig und homogen ausgebildetes Magnetfeld wird auch dadurch unterstützt, dass das Kabel im Wesentlichen in konzentrischen Kreisen in der Detektorspule angeordnet ist. Dadurch, dass lediglich in einem Übergangsbereich von der Anordnung des Kabels in den konzentrischen Kreisen abgewichen wird, wird die Ausbildung eines regelmäßigen Magnetfeldes unterstützt. Hierbei wird nur im Übergangsbereich von der Kreisform abgewichen. Anders ausgedrückt ist die reguläre Kreisform der konzentrischen Kreise in diesem Übergangsbereich unterbrochen ausgebildet. Des Weiteren wird die Ausbildung eines vorteilhaft dimensionierten Magnetfeldes dadurch unterstützt, dass die weitere Störung des Feldes, welche durch die Rückleitung des Kabels vom äußersten konzentrischen Kreis entsteht, ebenfalls in dem Übergangsbereich erfolgt. Die vorliegende Spulengeometrie kann daher, wenn überhaupt, lediglich im Bereich des Übergangsbereiches vernachlässigbare Abweichungen vom optimalen Feldverlauf aufweisen.

Vorteilhaft ist es, wenn ein mehradriges Kabel vorgesehen ist. Das Kabel kann beispielsweise vier oder mehr Adern aufweisen. Die einzelnen Adern des Kabels können in Serie oder parallel geschaltet werden. Bevorzugt ist hierbei eine Serienschaltung, das heißt, die Adern werden hintereinander geschaltet. Hierdurch ergibt sich beispielsweise für eine Detektorspule mit einem Durchmesser von zirka 280 mm bei 12 Windungen eines vieradrigen Kabels eine Gesamtinduktivität von zirka 400 µH. Bei dieser Abschätzung ist bereits die halbleitende Abschirmung des Kabels berücksichtigt.

Bevorzugterweise ist die Schirmung etwa auf halber Länge des Kabels unterbrochen, sodass zwei Teilschirmungen gebildet sind. Hierbei kann beispielsweise die Schirmung im Kabelmantel vorgesehen sein, der auf halber Länge des Kabels aufgetrennt ist. Grundsätzlich können die beiden Teilschirmungen beliebig verschaltet sein, wobei sie bevorzugt beide auf Masse gelegt werden. Durch eine derartige Ausführung wird ein symmetrischer Abschirmungseffekt erzielt, welcher störende dielektrische Effekte, besonders wirkungsvoll unterdrücken kann. Derartige dielektrische Effekte können beispielsweise durch feuchtes Gras entstehen.

Grundsätzlich können die konzentrischen Kreise einen beliebigen Abstand zueinander aufweisen, der sich auch von einem Kreis zum nächsten unterscheiden kann. Vorteilhaft ist jedoch, wenn die konzentrischen Kreise einen konstanten radialen Abstand zueinander aufweisen. Hierdurch wird eine flächige und gleichmäßige Ausbildung des Magnetfeldes der Detektorsonde unterstützt. Dadurch kann auch ein besonders homogen ausgebildetes Magnetfeld erzeugt werden, welches gute Detektionsergebnisse liefert.

An der Oberseite der Oberschale des Sondengehäuses können sternartig Stege vorgesehen sein, die sich strahlenförmig vom Zentralbereich zum Außenbereich erstrecken. Die Stege dienen zur mechanischen Stabilisierung der Oberschale und somit des entsprechenden Suchtellers. Es können beispielsweise vier Stege x-förmig vorgesehen sein oder sechs Stege mit einem Winkelabstand von 60° auf dem runden Oberteil der Oberschale vorgesehen sein. Die Anzahl der Stege beeinflusst maßgeblich die mechanische Stabilität der Oberschale.

Es hat sich als vorteilhaft heraus gestellt, wenn zur Anbringung einer stabförmigen Halterung an der Oberseite der Oberschale, im Zentralbereich eine Gelenkverbindung ausgebildet ist. Diese kann bevorzugt etwas azentrisch an der Oberschale vorgesehen sein. Da die Sonde nicht komplett symmetrisch aufgebaut ist, kann durch die azentrische Anbringung, welche im Schwerpunkt oder in der Nähe des Schwerpunktes erfolgen kann, eine einfache und flexible Handhabung erreicht werden.

Die notwendige Elektronik der Detektorsonde kann beispielsweise im Zentralbereich untergebracht werden. Dieser kann so bemessen sein, dass die Elektronik in Form von gedruckten Schaltungen dort eingebracht werden kann. Erfindungsgemäß werden die konzentrischen Kreise so nahe wie möglich zum Mittelpunkt der Detektorsonde fortgeführt. Jedoch ist aus praktischen Gründen, wie dem Biegeradius des verwendeten Kabels oder dem notwendigen Raum zur Aufnahme der Elektronik, eine Fortführung der Kreise bis zum Mittelpunkt der Detektorsonde oft schwierig. Anhand von Versuchen wurde auch festgestellt, dass ein Fortführen der konzentrischen Kreise bis zum Mittelpunkt keine wesentliche Verbesserung der Selektionsergebnisse mit sich bringt und somit nicht unbedingt erforderlich ist.

Bei dem erfindungsgemäßen Verfahren zum Herstellen einer Detektorsonde ist vorgesehen, dass in einer Oberschale an der Unterseite Kabelmulden ausgebildet sind. Diese Kabelmulden werden als im Wesentlichen konzentrische Kreise ausgebildet, welche einen Übergangsbereich aufweisen. Dieser Übergangsbereich erstreckt sich strahlenförmig von einem Zentralbereich der Detektorsonde zu einem Außenbereich. In diesem Übergangsbereich sind die konzentrischen Kreise abweichend von einer Kreisform gestaltet. Insbesondere können sie dort unterbrochen sein. Die Kabelmulden werden von dem Außenbereich der Detektorsonde bis zum Zentralbereich ausgebildet. In die so vorgesehenen Kabelmulden wird ein mindestens einadriges Kabel eingebracht. Hierbei sind die Kabelmulden und der Querschnitt des Kabels derart ausgelegt, dass bei einem in die Kabelmulden eingebrachten Kabel eine kraft-und/oder formschlüssige Verbindung zwischen den Kabelmulden und dem Kabel entsteht. In dem Übergangsbereich wird das Kabel jeweils von einem radial innen liegenden konzentrischen Kreis zu dem benachbarten radial weiter außen liegenden konzentrischen Kreis geführt. Außerdem wird das Kabel im Übergangsbereich vom äußersten konzentrischen Kreis zum Zentralbereich zurückgeführt. Als Kabel wird ein Kabel mit einer halbleitenden Schirmung gewählt.

Als ein Grundgedanke des erfindungsgemäßen Herstellungsverfahrens kann angesehen werden, dass das Kabel mindestens einadrig, bevorzugt aber mehradrig ausgeführt ist, und an der Unterseite der Oberschale ohne weitere Hilfsmittel angebracht werden kann. Durch das Ausbilden der Kabelmulden komplementär zu dem Kabelquerschnitt kann das Kabel ohne ein weiteres Befestigungsmittel in die Kabelmulden eingepresst werden. Hierdurch wird zum Einen eine exakte geometrische Fixierung des Kabels erreicht. Des Weiteren kann ein aufwändiges Vergießen oder Befestigen des Kabels entfallen, wodurch der Fertigungsprozess beschleunigt und somit vereinfacht wird.

Außerdem ist es vorteilhaft, dass die geometrische Auslegung bereits in der Oberschale vorgesehen wird. Hierdurch ist es nicht notwendig, das Kabel nach exakten geometrischen Vorgaben im freien Raum zu fixieren, was eine eventuelle Nachjustierung notwendig machen würde. Dadurch, dass die vorgeprägten Kabelmulden in der Oberschale vorgesehen sind, wird so eine exakte geometrische Vorgabe durch das Kabel erfüllt. Die Oberschale kann beispielsweise aus Kunststoff ausgebildet sein und durch ein Spritz-, Press- oder Tiefziehverfahren hergestellt werden. Durch ein derartiges Verfahren können die notwendigen hohen Genauigkeiten, insbesondere der Kabelmulden, erreicht werden, sodass keine Nachjustierung der fertigen Detektorsonde mehr erforderlich ist.

Der Querschnitt der Kabelmulden kann auf beliebige Weise ausgebildet sein, solange eine form- und/oder kraftschlüssige Fixierung eines entsprechenden Kabels in diesen Mulden möglich ist. Bevorzugt sind die Kabelmulden mit einem U-förmigen, C-förmigen, halbkreisförmigen oder kreissegmentförmigen Querschnitt ausgebildet. Des Weiteren kann das Kabel einen kreisförmigen Querschnitt aufweisen. Bei der Verwendung eines Kabels mit einem kreisförmigen Querschnitt bieten sich insbesondere C-förmige oder U-förmige sowie halbkreisförmige und halbkreissegmentförmige Querschnitte für die Kabelmulden an. Wichtig hierbei ist, dass das Kabel im Wesentlichen allein durch Einpressen beziehungsweise Eindrücken in die Kabelmulden fixiert wird und keine zusätzlichen Fixierungsmaßnahmen notwendig sind. Grundsätzlich ist aber auch eine Konstruktion mit Feder und Nut oder Ähnlichem möglich.

Um das eingebrachte Kabel vor äußeren Einflüssen zu schützen, kann anschließend an das Einbringen des Kabels in Kabelmulden eine Unterschale von unten an oder in die Oberschale angesetzt werden. Es ist aber ebenso möglich, die Oberschale mit einem leicht überstehenden Rand vorzusehen, und nach dem Anbringen des Kabels die Oberschale bodenseitig mit Harz oder dergleichen zu vergießen.

Wird eine Unterschale an die Oberschale angebracht, so entsteht zum Teil ein Freiraum zwischen der Ober- und Unterschale. Dieser kann in einer vorteilhaften Ausführungsform verschäumt werden. Hierdurch wird zum Einen die mechanische Stabilität der entstehenden Detektorsonde erhöht. Zum Anderen wird das Kabel in den Kabelmulden zusätzlich fixiert. Der Vorteil des Verschäumens ist, dass hierdurch das Gewicht der Sonde nur geringfügig erhöht wird und so auch weiterhin ein leichter Aufbau der Detektorsonde gewährleistet ist.

Eine Fuge zwischen der Ober- und Unterschale kann wasserdicht verklebt werden. Eine andere Möglichkeit, die alternativ oder zusätzlich hierzu verwendet werden kann, ist ein Verschweißen mittels Ultraschall.

Die Erfindung wird nachfolgend anhand eines Ausführungsbeispiels und schematischen Zeichnungen näher erläutert. In diesen Zeichnungen zeigen:
- Figur 1: eine perspektivische Ansicht einer erfindungsgemäßen Detektorsonde;
- Figur 2: eine perspektivische Ansicht einer erfindungsgemäßen Detektorsonde mit angebrachtem Befestigungsfuß für ein Tragrohr;
- Figur 3: den Kabelverlauf innerhalb einer erfindungsgemäßen Detektorsonde und
- Figuren 4 bis 6: jeweils eine perspektivische Schnittansicht der erfindungsgemäßen Detektorsonde in unterschiedlichen Produktionsschritten.

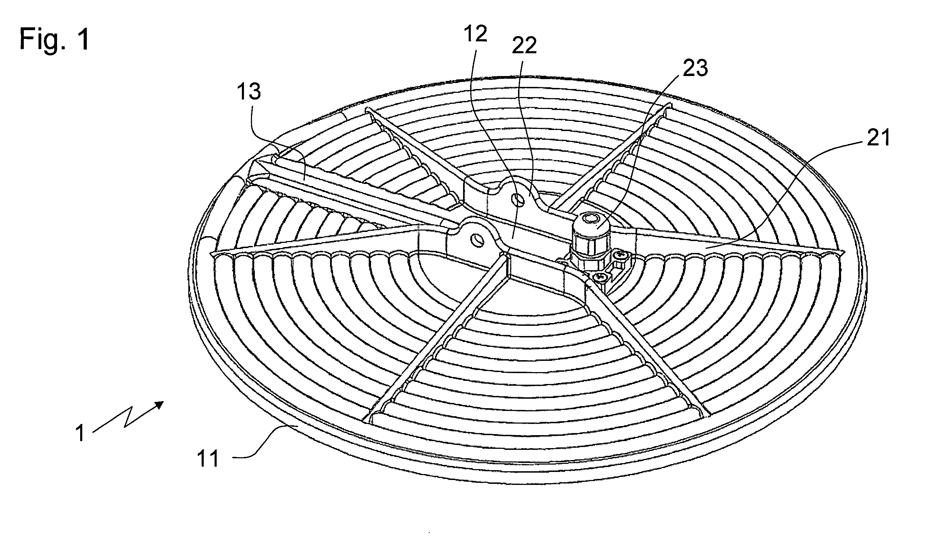

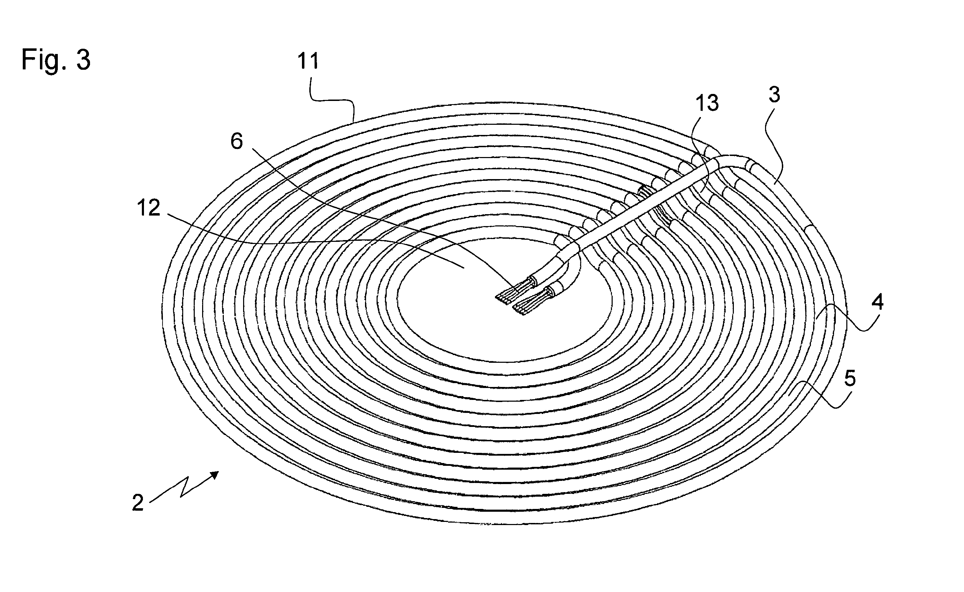

In Figur 1 ist eine perspektivische Ansicht von oben einer erfindungsgemäßen Detektorsonde 1 dargestellt. Die Detektorsonde 1 weist eine tellerartige Grundform auf. Innerhalb der Grundform der Detektorsonde 1 ist eine Detektorspule 2 angeordnet. Deren Verlauf wird insbesondere in Bezug auf Figur 3 später genauer erläutert. Von einem Zentralbereich 12 erstrecken sich sechs Stege 21 strahlenartig zu einem Außenbereich 11. Hierbei verringert sich die Höhe der Stege 21, je weiter sie zum Außenbereich 11 geführt sind. Die Stege 21 sind in dem hier dargestellten Ausführungsbeispiel im Wesentlichen regelmäßig, das heißt, mit jeweils 60° Abstand auf der kreisförmigen Oberfläche der Detektorsonde 1 angeordnet.

Die Stege 21 dienen maßgeblich zur mechanischen Verstärkung der Detektorsonde 1. Hierdurch unterliegt die Detektorsonde 1 nur geringen Verformungen durch Torsionskräfte. Im Zentralbereich 12 ist außerdem ein Kabelanschluss 23 angeordnet. Über diesen Kabelanschluss 23 wird die eigentliche Detektorspule 2 (hier nicht dargestellt) mit einer Steuer- und Auswerteelektronik verbunden. Wie später noch gezeigt wird, kann ein Teil der Steuer- und Auswerteelektronik jedoch auch im Zentralbereich 12 vorgesehen sein.

Die Stege 21 laufen im Zentralbereich 12 zusammen und bilden eine Gelenkverbindung 22 aus, an die ein Befestigungsfuß 24 für ein Tragrohr angebracht werden kann.

Die Gelenkverbindung 22 befindet sich im Zentralbereich 12, ist jedoch azentrisch angebracht. Zusammen mit dem Gesamtkonzept und der Gewichtsverteilung der Detektorsonde 1 ist die Gelenkverbindung 22 jedoch derart vorgesehen, dass sie im Wesentlichen im Schwerpunkt der Detektorsonde 1 liegt. Hierdurch wird eine gute Handhabung der Sonde 1 erreicht.

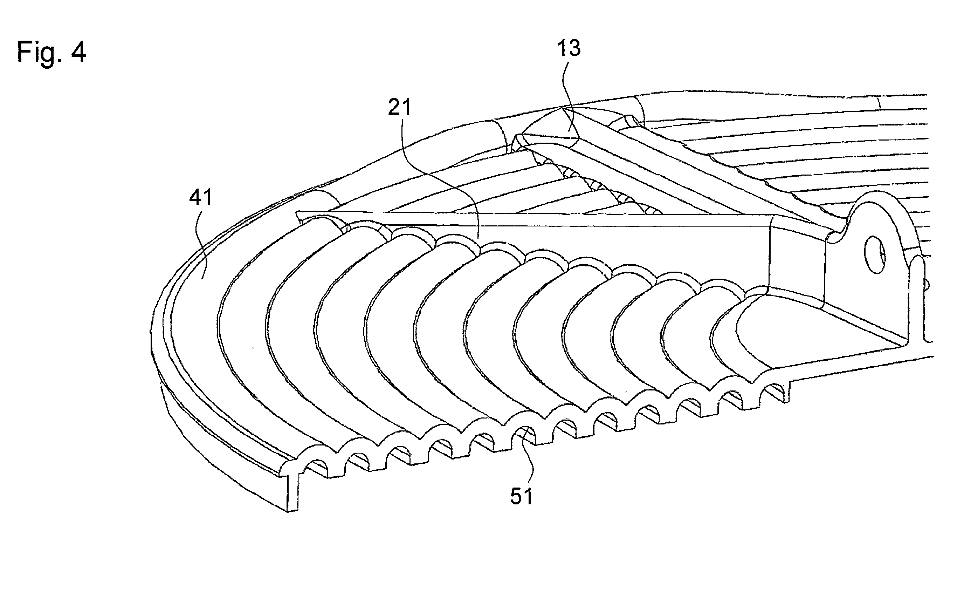

Die Oberfläche der Detektorsonde 1 weist bogen- bis halbkreisförmige Erhöhungen auf, die konzentrische Kreise ausbilden. Wie insbesondere in Bezug auf die Figuren 4 bis 6 später noch ausführlich beschrieben, dient diese Auslegung der Detektorsonde 1 dazu, die Wicklungen der Detektorspule 2 einfach fixieren zu können. Die konzentrisch ausgebildeten Erhöhungen auf der Oberfläche der Detektorsonde 1 weisen einen Übergangsbereich 13 auf. In diesem Übergangsbereich 13 wird, wie noch detaillierter ausgeführt wird, ein Kabel der Detektorspule 2 zwischen den einzelnen konzentrischen Kreisen übergeleitet.

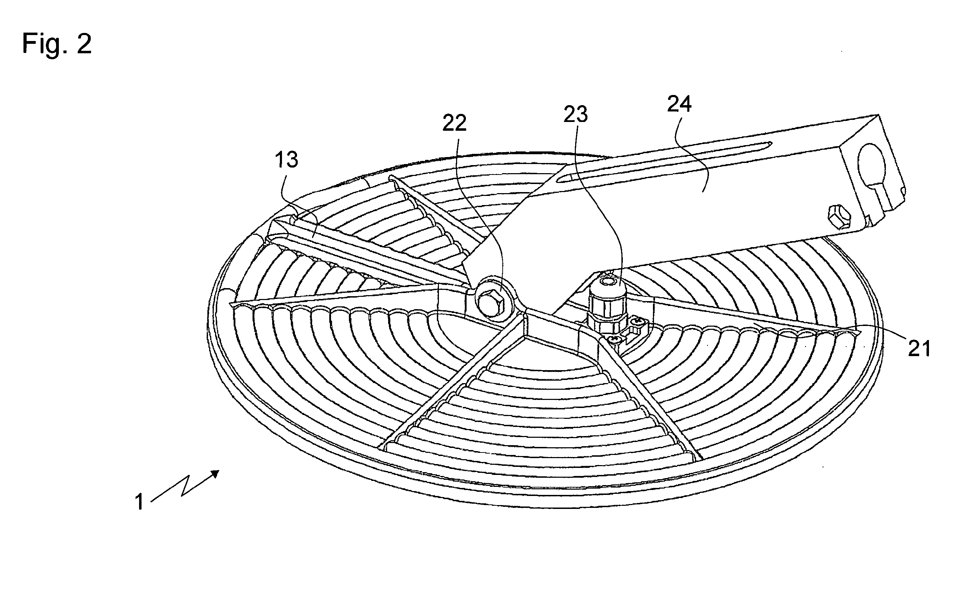

Ergänzend zu Figur 1 ist in Figur 2 ein Befestigungsfuß 24 an der Gelenkverbindung 22 angebracht. An diesem Befestigungsfuß 24 kann ein Tragrohr (nicht dargestellt) angesetzt werden.

In Figur 3 wird der Verlauf des Kabels 3 innerhalb der erfindungsgemäßen Detektorsonde 1 verdeutlicht.

Das Kabel 3 bildet die Detektorspule 2 der Detektorsonde 1 aus. Als Kabel 3 wird in dem hier dargestellten Ausführungsbeispiel ein mehradriges Kabel verwendet. Im Endbereich und im Anfangsbereich des Kabels 3 sind die einzelnen Adern 6 sichtbar. Das Kabel verläuft im Wesentlichen in konzentrischen Kreisen vom Zentralbereich 12 zum Außenbereich 11. Hierbei wird das Kabel 3 in Kabelmulden 51 (Fig. 4, 5, 6) angebracht. Die Kabelmulden 51 sind als halbkreisförmige Wölbungen auf der Oberseite der Detektorsonde 1, wie mit Bezug auf Figur 1 und 2 bereits beschrieben, sichtbar.

Das Kabel 3 wird in konzentrischen Kreisen verlegt. Um das Kabel 3 kontinuierlich ohne Unterbrechungen zu verlegen, ist ein Übergangsbereich 13 vorgesehen. In diesem Übergangsbereich 13 wird das Kabel 3 jeweils von einem weiter innen liegenden konzentrischen zu dem nächsten weiter außen liegenden konzentrischen Kreis übergeführt. Zusätzlich wird in dem Übergangsbereich 13 auch die Rückführung des Kabels 3 vom äußersten konzentrischen Kreis zum Zentralbereich 12 realisiert.

Das Kabel 3 ist mit einer halbleitenden Schirmung 4 versehen, die in den Mantel 5 des Kabels 3 mit eingelassen ist. Die Schirmung 4 dient dazu, dielektrische Effekte in der Detektorspule 2 zu verringern. Etwa auf der Hälfte der Länge des Kabels 3 ist dessen Mantel 5 unterbrochen ausgebildet. Dies dient dazu, die Schirmung 4 des Kabels 3 zu unterbrechen und so zwei Teilschirmungen zu erhalten. Diese beiden Teilschirmungen werden jeweils separat auf Masse gelegt.

Im Zentralbereich 12, in dem der Kabelanfang und das Kabelende vorgesehen sind, kann das Kabel 3 mit einer dort vorgesehenen Steuer- und Auswerteelektronik verbunden sein. Es ist jedoch auch möglich, lediglich Anschlüsse und eine Verkabelung der einzelnen Adern vorzusehen und einen Großteil oder die gesamte Betriebs- und Auswerteelektronik außerhalb der Detektorsonde 1 vorzusehen. Hierzu dient die Verbindung mittels des Kabelanschlusses 23. Es können jedoch auch Teile innerhalb der Sonde 1 und Teile außerhalb der Sonde 1 vorgesehen sein.

Unter Bezugnahme auf die Figuren 4 bis 6 wird exemplarisch ein möglicher Produktionsprozess für die erfindungsgemäße Detektorsonde 1 beschrieben.

In Figur 4 ist eine perspektivische Schnittansicht einer Oberschale 41 einer erfindungsgemäßen Detektorsonde 1 dargestellt. Hierbei sind ein Steg 21 und der Übergangsbereich 13 sichtbar. Zusätzlich sind durch die Schnittansicht die einzelnen Kabelmulden 51, welche in der Oberschale 41 ausgebildet sind, dargestellt. Aufgrund der Kabelmulden weist die Oberschale 41 ihre charakteristischen Wölbungen auf, die in konzentrischen Kreisen verlaufen.

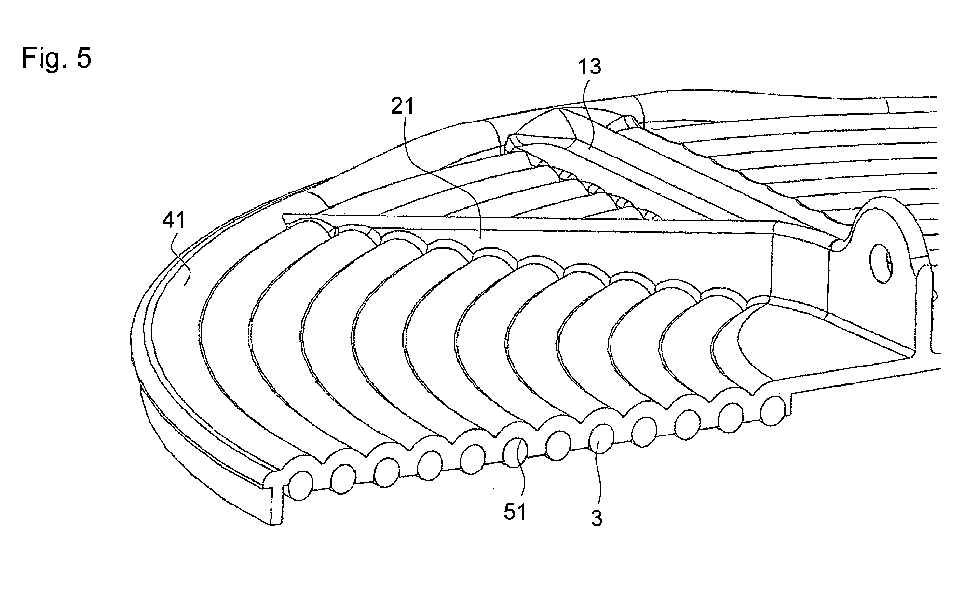

In einem nächsten Schritt, welcher in Figur 5 dargestellt ist, ist ein Kabel 3 in die Kabelmulden 51 eingebracht worden. Hierbei sind die Kabelmulden 51 und das Kabel 3 derart gewählt, dass das Kabel 3 durch Einpressen in die Kabelmulden 51 in diesen befestigbar ist. Das Kabel 3 geht sozusagen eine kraftschlüssige Verbindung mit den Kabelmulden 51 ein. Durch das Vorsehen von Kabelmulden 51 in der Oberschale 41 wird die exakte geometrische Form der entstehenden Spule, welche durch das Kabel 3 ausgebildet wird, bereits definiert. Es ist so möglich, das Kabel 3 exakt zu positionieren und so ungewollte Charakteristika der Spule 2 zu verhindern.

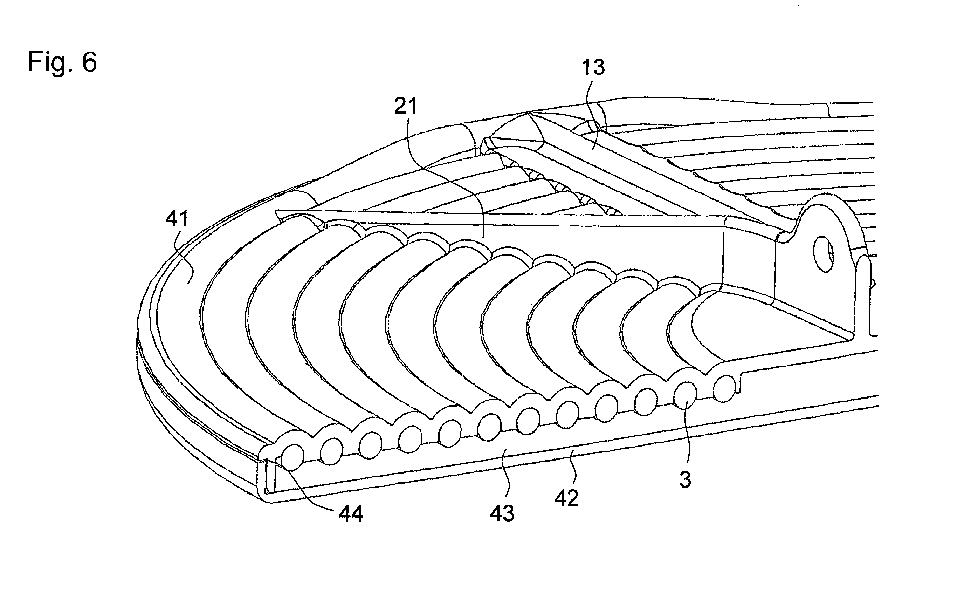

In einem nächsten Schritt, welcher in Figur 6 verdeutlicht wird, wird von unten an die Oberschale 41 eine Unterschale 42 angebracht. Zwischen der Oberschale 41 und der Unterschale 42 ist in dem hier dargestellten Ausführungsbeispiel konstruktionsbedingt ein Freiraum 43 vorhanden. Dieser kann beispielsweise verschäumt bzw. ausgeschäumt werden, um die Gesamtstabilität der Detektorsonde 1 zu erhöhen.

An den Kontaktflächen zwischen der Oberschale 41 und der Unterschale 42 ist eine Fuge 44 bzw. flanschartiger Rand ausgebildet. Diese kann durch Verkleben und/oder Ultraschallschweißen wasserdicht verschlossen werden.

Grundsätzlich ist es aber nicht notwendig, eine Unterschale 42 an der Oberschale 41 anzubringen. Es ist ebenso möglich, in der Phase der Herstellung der Sonde nach Figur 5, die Sonde umzudrehen, und den unteren Bereich der Detektorsonde 1 beispielsweise mit Harz zu vergießen, um die notwendige Festigkeit und Stabilität der Sonde 1 sowie einen bodenseitigen Abschluss zu erreichen.

Mit der erfindungsgemäßen Detektorsonde kann eine verbesserte Detektionsgenauigkeit für das PI-Verfahren erreicht werden. Zusätzlich bietet die Detektorsonde eine Reduktion von bodenmagnetischen Einflüssen auf das Detektionsergebnis. Ferner kann die erfindungsgemäße Detektionssonde einfach und effizient hergestellt werden.

## Patentansprüche

1. Detektorsonde (1),
mit einer Detektorspule (2), welche mehrere Windungen aufweist, wobei die Windungen in derselben geometrischen Ebene vorgesehen sind und
die Windungen durch ein mindestens einadriges Kabel (3) gebildet sind, **dadurch gekennzeichnet,**
**dass** das Kabel (3) zum Bilden der Windungen der Detektorspule (2) im Wesentlichen in konzentrischen Kreisen angeordnet ist,
**dass** die konzentrischen Kreise von einem Außenbereich (11) bis zum einem Zentralbereich (12) der Sonde (1) vorgesehen sind,
**dass** jeder konzentrische Kreis in einem sich vom Zentralbereich (12) strahlenförmig zum Außenbereich (11) erstreckenden Übergangsbereich (13) abweichend von einer Kreisform ausgebildet ist,
**dass** in dem Übergangsbereich (13) das Kabel (3) jeweils von einem radial innen liegenden konzentrischen Kreis zu dem benachbarten radial weiter außen liegenden konzentrischen Kreis übergeleitet ist,
**dass** in dem Übergangsbereich (3) das Kabel vom äußersten konzentrischen Kreis zum Zentralbereich (12) vorgesehen ist und
**dass** das Kabel eine halbleitende Schirmung (4) aufweist.

2. Detektorsonde nach Anspruch 1,
**dadurch gekennzeichnet,**
**dass** ein mehradriges Kabel (3) vorgesehen ist und
**dass** die Adern (6) hintereinander geschaltet sind.

3. Detektorsonde nach einem der Ansprüche 1 oder 2,
**dadurch gekennzeichnet,**
**dass** die Schirmung (4) etwa auf halber Länge des Kabels (3) unterbrochen ist, sodass zwei Teilschirmungen ausgebildet sind und
**dass** die Enden beider Teilschirmungen auf Masse gelegt sind.

4. Detektorsonde nach einem der Ansprüche 1 bis 3,
**dadurch gekennzeichnet,**
**dass** die konzentrischen Kreise einen konstanten radialen Abstand zueinander aufweisen.

5. Detektorsonde nach einem der Ansprüche 1 bis 4,
**dadurch gekennzeichnet,**
**dass** die Detektorspule (2) als Gehäuse mindestens eine Oberschale (41) aufweist,
**dass** sternartige Stege (21) auf der Oberseite der Oberschale (41) vom Zentralbereich (12) strahlförmig zum Außenbereich (11) erstreckend vorgesehen sind.

6. Detektorsonde nach einem der Ansprüche 1 bis 5,
**dadurch gekennzeichnet,**
**dass** an der Oberseite der Oberschale (41) im Zentralbereich (12), azentrisch eine Gelenkverbindung (22) ausgebildet ist.

7. Detektorsonde nach einem der Ansprüche 1 bis 6,
**dadurch gekennzeichnet,**
**dass** die halbleitende Schirmung (4) als halbleitende Kunststoffschirmung ausgeführt ist.

8. Verfahren zum Herstellen einer Detektorsonde (1),
insbesondere nach einem der Ansprüche 1 bis 7,
**dadurch gekennzeichnet,**
**dass** in einer Oberschale (41) an der Unterseite Kabelmulden (51) ausgebildet werden,
**dass** die Kabelmulden (51) im Wesentlichen als konzentrische Kreise ausgebildet werden, welche in einem Übergangsbereich (13), der sich strahlenförmig von einem Zentralbereich (12) der Detektorsonde (1) zu einem Außenbereich (11) erstreckt, unterbrochen sind,
**dass** die Kabelmulden (51) von dem Außenbereich (11) der Detektorsonde (1) bis zum Zentralbereich (12) ausgebildet werden,
**dass** ein mindestens einadriges Kabel (3) in die Kabelmulden (51) eingebracht wird,
**dass** die Kabelmulden (51) und der Querschnitt des Kabels (3) derart ausgelegt werden, um bei eingebrachtem Kabel (3) eine kraft- und/oder formschlüssige Verbindung zwischen Kabelmulde (51) und Kabel (3) einzugehen, dass das Kabel (3) jeweils im Übergangsbereich (13) von einem radial inneren konzentrischen Kreis zu dem benachbarten radial äußeren konzentrischen Kreis geführt wird,
**dass** das Kabel im Übergangsbereich (13) vom äußersten konzentrischen Kreis zum Zentralbereich (12) geführt wird und
**dass** ein Kabel (3) mit einer halbleitenden Schirmung (4) gewählt wird.

9. Verfahren nach Anspruch 8,
**dadurch gekennzeichnet,**
**dass** das Kabel (3) mit einem kreisförmigen Querschnitt gewählt wird und dass die Kabelmulden (51) mit einem Querschnitt ausgebildet werden, der C-förmig, U-förmig, halbkreisförmig oder kreissegmentförmig ist.

10. Verfahren nach Anspruch 8 oder 9,
**dadurch gekennzeichnet,**
**dass** nach Einbringen des Kabels (3) in die Kabelmulden (51) eine Unterschale (42) von unten an oder in die Oberschale (41) angesetzt und/oder mit der Oberschale (41) verbunden wird.

11. Verfahren nach Anspruch 10,
**dadurch gekennzeichnet,**
**dass** ein Freiraum (43), welcher zwischen der Oberschale (41) und Unterschale (42) ausgebildet ist, verschäumt wird.

12. Verfahren nach Anspruch 10 oder 11,
**dadurch gekennzeichnet,**
**dass** eine Fuge (44) zwischen Ober- (41) und Unterschale (42) wasserdicht verklebt und/oder mittels Ultraschallschweißen verschlossen wird.

13. Verfahren nach einem der Ansprüche 8 bis 12,
**dadurch gekennzeichnet,**
**dass** ein Kabel (3) mit einer halbleitenden Kunststoffschirmung gewählt wird.
